# EUROPÄISCHE PATENTANMELDUNG

(11) **EP 1 281 548 A1**
(43) Veröffentlichungstag der Anmeldung: **05.02.2003**
(21) Anmeldenummer: 02014284.0
(22) Anmeldetag: 01.07.2002
(51) Int. Cl.: B60J 5/04

(54) **Seitenaufprallträger**

(30) Priorität: 02.08.2001 DE 10138034
(71) Anmelder: Benteler Automobiltechnik GmbH & Co. KG, 33104 Paderborn (DE)
(72) Erfinder: Gosmann, Stefan, 33181 Bad Wünnenberg (DE)
(74) Vertreter: Ksoll, Peter, Dr.-Ing.

(57) **Zusammenfassung**

Die Erfindung betrifft einen Seitenaufprallträger 3 zur Eingliederung in die Fahrzeugtür eines Kraftfahrzeugs. Der Seitenaufprallträger 3 weist ein Längsprofil 4 mit türsäulenseitigen Endabschnitten 5, 6 auf. Das Längsprofil 4 ist bezogen auf seine Mittelquerebene MQ unsymmetrisch ausgebildet und in einem zur Sitzposition eines Insassens benachbarten 1. Längenabschnitts 13 verstärkt. Hierzu ist der Querschnitt des 1. Längenabschnitts 13 gegenüber dem Querschnitt des sich hieran anschließenden 2. Längenabschnitts 15 vergrößert. Bevorzugt ist das Längsprofil 4 auf dem überwiegenden Teil seiner Länge im Querschnitt hutförmig ausgebildet.

## Beschreibung

Die Erfindung betrifft einen Seitenaufprallträger gemäß den Merkmalen im Oberbegriff von Patentanspruch 1.

Seitenaufprallträger dienen dem Schutz von PKW-Insassen vor Verletzungen bei einem seitlichen Anprall. Sie kommen als Türverstärkungen zum Einsatz. In Abhängigkeit von der Stabilität der Grundkonstruktion sollen sie eine hohe Steifigkeit quer zur Fahrtrichtung aufweisen.

Eine Rohrkonstruktion ebenso wie eine Faltkonstruktion eines Seitenaufprallträgers mit trapezförmig flach verbreiterten Endabschnitten gehen aus der EP 0 728 607 A2 hervor. Die WO 94/07709 offenbart einen Seitenaufprallträger, der auf dem überwiegenden Teil seiner Länge ein im Querschnitt hutförmiges Profil aufweist, welches sich zu den türsäulenseitigen Endabschnitten hin sowohl in der Breite als auch in der Höhe verringert.

Solche Seitenaufprallträger werden meist aus Ziehblech gefertigt. Die hutförmigen Profile besitzen den Vorteil, dass sie in der Regel nur aus einem Teil bestehen und meist leichter als Rohrausführungen sind.

Den Seitenaufprallträgern aus Blechprofilen ist gemein, dass sie flach zu den Enden hin auslaufen, wo sie an das Türendblech gefügt werden. Sie versteifen die Türstruktur und absorbieren Energie beim Seitencrash. Der aus der WO 94/07709 bekannte Aufprallträger verjüngt sich - wie gesagt - von der Mitte ausgehend zu den Enden hin, wobei er in der Breite und in der Höhe abnimmt. Ein Schwachpunkt des Seitenaufprallträgers liegt im Bereich der Sitzprosition des Insassen, wo er ausknicken oder ausbeulen kann.

Der Erfindung liegt daher ausgehend vom Stand der Technik die Aufgabe zugrunde, einen im Crashverhalten verbesserten Seitenaufprallträger zu schaffen, der einen höhen Insassenschutz gewährleistet.

Die Lösung dieser Aufgabe besteht in einem Seitenaufprallträger gemäß den Merkmalen von Patentanspruch 1.

Kernpunkt bildet die Maßnahme, das Längsprofil des Seitenaufprallträgers bezogen auf seine Mittelquerebene unsymmetrisch auszubilden und in einen zur Sitzposition eines Insassen benachbarten ersten Längenabschnitt gezielt zu verstärken.

Danach ist der Seitenaufprallträger im Bereich der Sitzposition des Insassen so gestaltet, dass die Belastung auf den Insassen im Crashfall minimiert, zumindest extrem verringert ist. Um die Aufprallbelastung gering zu halten, wird erfindungsgemäß die Deformation und die Intrusion des Seitenaufprallträgers in Bereiche verlagert, die sich als weniger belastungsrelevant für den Insassen darstellen. Dazu wird der Seitenaufprallträger abhängig von der Einbaulage im Bereich der Hüfte, Abdomen und Torax gezielt verstärkt. Hierdurch wird die Deformation in den vorderen Beinbereich verlagert. In diesem Bereich ist ein größerer Freiraum für ein passives Ausweichen der Beine und für einen Abbau der Crashenergie durch Verlagerung des Seitenaufprallträgers vorhanden.

Die Verstärkung des Seitenaufprallträgers im Bereich der Sitzposition des Insassen kann bevorzugt durch eine Querschnittsvergrößerung realisiert werden (Anspruch 2), bei dem sowohl Breite als auch Höhe im ersten Längenabschnitt gegenüber einem sich hieran in Richtung zur Beinposition eines Insassen anschließenden zweiten Längenabschnitts vergrößert sind.

Die Verstärkung im ersten Längenabschnitt kann selbstverständlich auch durch andere konstruktive Maßnahmen realisiert werden, beispielsweise durch ein Schließblech im ersten Längenabschnitt und/oder durch verstärkende Einbauten in diesem Bereich.

Das Längsprofil des Seitenaufprallträgers kann sowohl als offenes als auch als geschlossenes Profil ausgebildet sein.

Gemäß den Merkmalen von Anspruch 3 ist das Längsprofil des Seitenaufprallträgers auf mindestens dem überwiegenden Teil seiner Länge im Querschnitt hutförmig ausgebildet. Das Profil weist einen zentralen Steg und zwei Schenkel auf, an deren Längskanten quer abstehende Seitenflansche vorgesehen sind.

Die Erfindung ist nachfolgend anhand eines in den Zeichnungen dargestellten Ausführungsbeispiels näher beschrieben. Es zeigen:
- Figur 1: im Schema eine Ansicht auf eine Fahrgastzelle eines Kraftfahrzeugs mit der Darstellung eines Insassen in der Sitzposition und einem Seitenaufprallträger und
- Figur 2: in der Draufsicht einen erfindungsgemäßen Seitenaufprallträger.

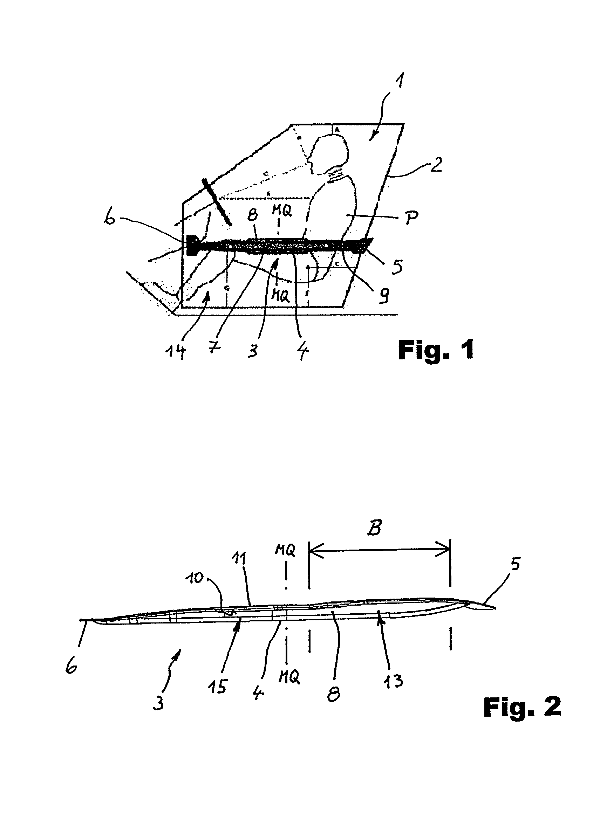

Figur 1 zeigt eine Ansicht auf die Fahrgastzelle 1 eines ansonsten nicht näher dargestellten Kraftfahrzeugs. Man erkennt einen Insassen P in der Sitzposition. In der Fahrzeugtür 2 ist ein Seitenaufprallträger 3 eingegliedert, welcher ein im Querschnitt zumindest auf dem überwiegenden Teil seiner Länge hutförmiges Längsprofil 4 mit türsäulenseitigen Endabschnitten 5, 6 besitzt. Das Längsprofil 4 weist einen zentralen Steg 2 mit zwei seitlichen Schenkeln 8, 9 auf, an deren Längskanten 10 quer abstehende Seitenflansche 11, 12 vorgesehen sind.

Der Seitenaufprallträger 3 besteht aus Metallblech und soll die Fahrzeugtür 2 bei einem Seitenaufprall versteifen und Energie absorbieren

Das Längsprofil 4 ist bezogen auf seine Mittelquerebene MQ unsymmetrisch ausgebildet, wie die Figur 2 zeigt. In einem zur Sitzposition des Insassen P benachbarten 1. Längenabschnitt 13 ist das Längsprofil 4 verstärkt. Der verstärkte Bereich ist in Figur 2 mit B bezeichnet. Der Querschnitt des 1. Längenabschnitts 13 ist gegenüber dem sich hieran in Richtung zum Beinraum 14 des Insassen P anschließenden 2. Längenabschnitts 15 vergrößert, wobei sowohl die Breite des Stegs 7 als auch die Höhe der Schenkel 8, 9 zunehmen.

Durch die gezielte Verstärkung des 1. Längenabschnitts 13 wird die Aufprallbelastung des Insassen P verringert. Die Deformation und die Intrusion, d.h. das Einbringen bzw. Verlagerung des Seitenaufprallträgers 3 wird in den 2. Längenabschnitt 15 verlagert, also in einen Bereich, der für den Insassen P weniger belastungsrelevant ist. Hierdurch wird ein stärkerer Schutz im Bereich der Hüfte, des Abdomen und des Torax des Insassens P erzielt.

### Bezugszeichenaufstellung

- 1 -: Fahrgastzelle
- 2 -: Fahrzeugtür
- 3 -: Seitenaufprallträger
- 4 -: Längsprofil
- 5 -: Endabschnitt
- 6 -: Endabschnitt
- 7-: Steg
- 8 -: Schenkel
- 9-: Schenkel
- 10 -: Längskante
- 11 -: Seitenflansch
- 12 -: Seitenflansch
- 13 -: 1. Längenabschnitt
- 14 -: Beinraum
- 15 -: 2. Längenabschnitt

- P -: Insasse
- MQ -: Mittelquerebene
- B -: Verstärkungsbereich

## Patentansprüche

1. Seitenaufprallträger zur Eingliederung in die Fahrzeugtür (2) eines Kraftfahrzeugs, welcher ein Längsprofil (4) mit türsäulenseitigen Endabschnitten (5, 6) besitzt, **dadurch gekennzeichnet, dass** das Längsprofil (4), bezogen auf seine Mittelquerebene (MQ) unsymmetrisch ausgebildet und in einem zur Sitzposition eines Insassens (P) benachbarten 1. Längenabschnitt (13) verstärkt ist.

2. **Seitenaufprallträger nach Patentanspruch 1, dadurchgekennzeichnet**, dass der Querschnitt des verstärkten 1. Längenabschnitts (13) gegenüber dem Querschnitt eines sich hieran anschließenden 2. Längenabschnitt (15) vergrößert ist.

3. Seitenaufprallträger nach Patentanspruch 1 oder 2, **dadurch gekennzeichnet,dass** das Längsprofil (4) auf mindestens dem überwiegenden Teil seiner Länge im Querschnitt hutförmig ausgebildet ist.
